# EUROPEAN PATENT SPECIFICATION

(11) **EP 2 456 149 B1**
(45) Date of publication and mention of the grant of the patent: **03.07.2019**
(21) Application number: 10813274.7
(22) Date of filing: 24.05.2010
(51) Int. Cl.: H04L 12/66, H04L 29/12

(54) **METHOD, SYSTEM AND APPARATUS FOR TRANSMITTING INFORMATION ACROSS SIGNALING NETWORKS**
VERFAHREN, SYSTEM UND VORRICHTUNG ZUR INFORMATIONSÜBERTRAGUNG ZWISCHEN SIGNALISIERUNGSNETZWERKEN
PROCÉDÉ, SYSTÈME ET APPAREIL DE TRANSMISSION D'INFORMATIONS SUR DES RÉSEAUX DE SIGNALISATION

(30) Priority: 03.09.2009 CN 200910171290
(43) Date of publication of application: 23.05.2012
(73) Proprietor: ZTE Corporation, Shenzhen, Guangdong 518057 (CN)
(72) Inventor: XUN, Zhijian, Shenzhen Guangdong 518057 (CN); LIANG, Qingyong, Shenzhen Guangdong 518057 (CN)
(74) Representative: Manitz Finsterwald Patent- und Rechtsanwaltspartnerschaft mbB
(86) International application number: PCT/CN2010/073142
(87) International publication number: WO 2011/026352

(56) References cited:
- EP-A1- 1 777 970
- WO-A1-02/25959
- WO-A1-2007/019782
- CN-A- 101 052 019
- CN-C- 1 287 552
- CN-C- 1 309 230
- KR-A- 20090 037 154
- US-A1- 2007 066 326

## Description

### Technical Field

The present invention relates to the field of wireless communication, and in particular, to a method, a system and an apparatus for transmitting information across signaling networks in the case of interconnection between multi-signaling networks.

### Background of the Related Art

The message transfer part 3 - user adaptation layer (M3UA) protocol is described in the protocol stack of the signal transport protocol (SIGTRAN) defined by the internet engineering task force (IETF), which is mainly used for the intercommunication between the No.7 signaling network and the internet protocol (IP) network.

Along with the development of the network convergence and the IP technology, the networking case of the interconnection between IP networks occurs, that is, the M3UA protocol supports the IP signaling transfer point (IPSTP), in other words, the signaling point in the signaling network has the transfer function.

When the networking environment is relatively complex, the M3UA represents the type of signaling network by using the parameter Network Appearance to divide different signaling networks, and this parameter network appearance normally needs to occupy 4 bytes. Different signaling networks are isolated logically and not interconnected. Different signaling networks can have a same signaling point code, and the signaling point code is the address of the signaling point, which is used for identifying the signaling point.

When the network is expanded or upgraded, and when the IPSTP function of the M3UA is used for interconnecting the signaling networks in multiple areas or interconnecting the networks of multiple manufacturers, the network types may be different due to each network being planned individually, which causes that some signaling points between the networks can not communicate.

The document WO 02/25959 A1 discloses when an SCCP protocol according to the SS7 signaling system is used in the network layer and some other protocol than a protocol according to the SS7 signaling system is used in the lower layer, an address according to the second system is set as a proper address in the address field of the addressing according to the SCCP protocol, the address is marked as a global title address of the SCCP protocol, and the proper address is transmitted from the first layer to the second layer, in this way the lower layer receives an address it can use for routing and there is no need to change the addressing of the SCCP protocol. Related technologies are known from EP1777970A1, US2007066326A1 and WO2007019782A1.

### Summary of the Invention

The technical problem to be solved by the present invention is to provide a method, a system and an apparatus for transmitting information across signaling networks, in which the message interaction and the signaling network management are implemented in different signaling networks in the case of keeping the existing signaling configuration.

The present invention in order to solve the above problem is defined in the independent claims.

A method for transmitting information across networks comprises: when a signaling transfer point belongs to more than one signaling network at the same time, setting a mapping relation between different signaling networks on the signaling transfer point according to an interaction requirement of said different signaling networks; signaling networks to which the signaling transfer point belongs comprising a first signaling network and a second signaling network; after receiving a message indicating a destination signaling point code sent by the first signaling network, and when judging that there is no signaling point where a signaling point code is the destination signaling point code in the first signaling network, the signaling transfer point converting the message into a message in the second signaling network according to the mapping relation; and when judging that a destination signaling point of the converted message is available in the second signaling network, forwarding the message in the second signaling network.

The above method further has the following characteristics:
the mapping relation comprises a corresponding relation of network types of the first signaling network and the second signaling network; the step of converting the message into the message in the second signaling network according to the mapping relation comprises: converting the destination signaling point code in the first signaling network into the destination signaling point code in the second signaling network according to the mapping relation; and
the step of forwarding the message in the second signaling network comprises: forwarding the message in the second signaling network when there is a signaling point where the signaling point code is the destination signaling point code in the second signaling network and the signaling point is available in the second signaling network.

The above method further has the following characteristics:
the mapping relation comprises the corresponding relation of the network types of the first signaling network and the second signaling network;
the step of converting the message into the message in the second signaling network according to the mapping relation comprises: the signaling transfer point, after receiving a destination state audit message carrying the destination signaling point code sent by the first signaling network and when judging that no adjacent office where the signaling point code is the destination signaling point code is configured in the first signaling network, converting the destination signaling point code in the first signaling network into the destination signaling point code in the second signaling network according to the mapping relation; and
the step of forwarding the message in the second signaling network comprises: forwarding the message in the second signaling network when there is a signaling point where the signaling point code is the destination signaling point code in the second signaling network and a state of the signaling point is office direction available.

The above method further comprises:
the signaling transfer point, when judging that there is a signaling point where the signaling point code is the destination signaling point code in the second signaling network and judging that the state of the signaling point is an office direction unavailable state, returning an office direction unavailable message to the first signaling network; when judging that the state of the signaling point is a congestion state, returning a signaling point congestion message to the first signaling network.

The above method further has the following characteristics:
the mapping relation comprises the corresponding relation of the network types of the first signaling network and the second signaling network; and
the step of converting the message into the message in the second signaling network according to the mapping relation comprises: the signaling transfer point, after receiving the signaling point congestion message carrying the destination signaling point code sent by the first signaling network and when judging that no adjacent office where the signaling point code is the destination signaling point code is configured in the first signaling network, converting the destination signaling point code in the first signaling network into the destination signaling point code in the second signaling network according to the mapping relation.

The above method further has the following characteristics:
the mapping relation comprises the corresponding relation of the network types of the first signaling network and the second signaling network and corresponding relation of the signaling point codes; and the step of converting the message into the message in the second signaling network according to the mapping relation comprises: converting the destination signaling point code in the first signaling network in the message into a second destination signaling point code in the second signaling network according to the mapping relation.

A system for implementing message interaction across network types comprises a signaling transfer point belonging to more than one signaling network at the same time, wherein, the signaling transfer point comprises a mapping relation configuring unit and a message forwarding unit; the mapping relation configuring unit is configured to set a mapping relation between different signaling networks on the signaling transfer point according to an interaction requirement of said different signaling networks; and the message forwarding unit is configured to, after receiving a message indicating a destination signaling point code sent by a first signaling network and when judging that there is no signaling point where a signaling point code is the destination signaling point code in the first signaling network, convert the message into a message in a second signaling network according to the mapping relation, and when judging that the destination signaling point of the converted message is available in the second signaling network, forward the message in the second signaling network.

The above system further has the following characteristics:
the mapping relation stored by the mapping relation configuring unit comprises a corresponding relation of network types of the first signaling network and the second signaling network; and the message forwarding unit is configured to, after receiving a message indicating a destination signaling point code sent by a first signaling network and when judging that there is no signaling point where a signaling point code is the destination signaling point code in the first signaling network, convert the destination signaling point code in the first signaling network into the destination signaling point code in the second signaling network according to the mapping relation, and forward the message in the second signaling network when there is a signaling point where the signaling point code is the destination signaling point code in the second signaling network and the signaling point is available in the second signaling network.

The above system further has the following characteristics:
the mapping relation stored by the mapping relation configuring unit comprises the corresponding relation of the network types of the first signaling network and the second signaling network; and the message forwarding unit is configured to, after receiving a destination state audit message carrying the destination signaling point code sent by the first signaling network and when judging that no adjacent office where the signaling point code is the destination signaling point code is configured in the first signaling network, convert the destination signaling point code in the first signaling network into the destination signaling point code in the second signaling network according to the mapping relation, and forward the message in the second signaling network when there is a signaling point where the signaling point code is the destination signaling point code in the second signaling network and the state of the signaling point is office direction available.

The above system further has the following characteristics:
the message forwarding unit is further configured to: when judging that there is a signaling point where the signaling point code is the destination signaling point code in the second signaling network and judging that the state of the signaling point is an office direction unavailable state, return an office direction unavailable message to the first signaling network; and when judging that the state of the signaling point is a congestion state, return a signaling point congestion message to the first signaling network.

The above system further has the following characteristics:
the mapping relation stored by the mapping relation configuring unit comprises the corresponding relation of the network types of the first signaling network and the second signaling network; and the message forwarding unit is configured to convert the message into the message in the second signaling network according to the mapping relation by the following way: after receiving the signaling point congestion message carrying the destination signaling point code sent by the first signaling network and when judging that no adjacent office where the signaling point code is the destination signaling point code is configured in the first signaling network, converting the destination signaling point code in the first signaling network into the destination signaling point code in the second signaling network according to the mapping relation.

The above system further has the following characteristics:
the mapping relation stored by the mapping relation configuring unit comprises the corresponding relation of the network types of the first signaling network and the second signaling network and corresponding relation of the signaling point codes; and the message forwarding unit is configured to convert the message into the message in the second signaling network according to the mapping relation by the following way: after receiving the message indicating the destination signaling point code sent by the first signaling network and when judging that there is no signaling point where the signaling point code is the destination signaling point code in the first signaling network, converting the destination signaling point code in the first signaling network in the message into a second destination signaling point code in the second signaling network according to the mapping relation.

The above system further has the following characteristics:
the signaling transfer point further comprises a state management unit, wherein, the state management unit is configured to maintain states of signaling transfer points between different singling networks.

The above system further has the following characteristics:
the state management unit is configured to, when receiving the office direction available message, update the state of the signaling transfer point as the office direction available state; when receiving the office direction unavailable message, update the state of the signaling transfer point as the office direction unavailable state; and is configured to, when receiving the signaling point congestion message, update the state of the signaling transfer point as the congestion state.

A signaling transfer point, wherein the signaling transfer point belongs to more than one signaling network at the same time, and the signaling transfer point comprises:
a mapping relation configuring unit, configured to set a mapping relation between different signaling networks on the signaling transfer point according to an interaction requirement of different signaling networks; and
a message forwarding unit, configured to, after receiving a message indicating a destination signaling point code sent by a first signaling network and when judging that there is no signaling point where a signaling point code is the destination signaling point code in the first signaling network, convert the message into a message in a second signaling network according to the mapping relation, and when judging that the destination signaling point of the converted message is available in the second signaling network, forward the message in the second signaling network.

The above system further has the following characteristics:
the mapping relation comprises a corresponding relation of network types of the first signaling network and the second signaling network;
the message forwarding unit is configured to convert the message into the message in the second signaling network according to the mapping relation by the following way: converting the destination signaling point code in the first signaling network into the destination signaling point code in the second signaling network according to the mapping relation.

The above system further has the following characteristics:
the mapping relation comprises the corresponding relation of the network types of the first signaling network and the second signaling network and corresponding relation of the signaling point codes;
the message forwarding unit is configured to convert the message into the message in the second signaling network according to the mapping relation by the following way: converting the destination signaling point code in the first signaling network in the message into a second destination signaling point code in the second signaling network according to the mapping relation.

The above system further has the following characteristics:
the message forwarding unit is configured to, after receiving a destination state audit message carrying the destination signaling point code sent by the first signaling network and when judging that no adjacent office where the signaling point code is the destination signaling point code is configured in the first signaling network, convert the destination signaling point code in the first signaling network into the destination signaling point code in the second signaling network according to the mapping relation, and forward the message in the second signaling network when there is a signaling point where the signaling point code is the destination signaling point code in the second signaling network and a state of the signaling point is office direction available.

The above system further has the following characteristics:
the message forwarding unit is further configured to: when judging that there is a signaling point where the signaling point code is the destination signaling point code in the second signaling network and judging that the state of the signaling point is an office direction unavailable state, return an office direction unavailable message to the first signaling network; and when judging that the state of the signaling point is a congestion state, return a signaling point congestion message to the first signaling network.

The signaling transfer point further comprises:
a state management unit, configured to maintain states of the signaling transfer points between different signaling networks.

When a plurality of signaling networks are interconnected and in the case of keeping the existing signaling configuration, the present invention set the mapping relation between different signaling networks on the signaling transfer point, and the message interaction and the signaling network management are implemented in different signaling networks which cannot intercommunicate originally.

### Brief Description of Drawings

FIG. 1 is a composition structure diagram of a signaling transfer point in a system for implementing message interaction across network types according to an embodiment;
FIG. 2 is a flow diagram of method for transmitting information across signaling networks.

### Preferred Embodiments of the Present Invention

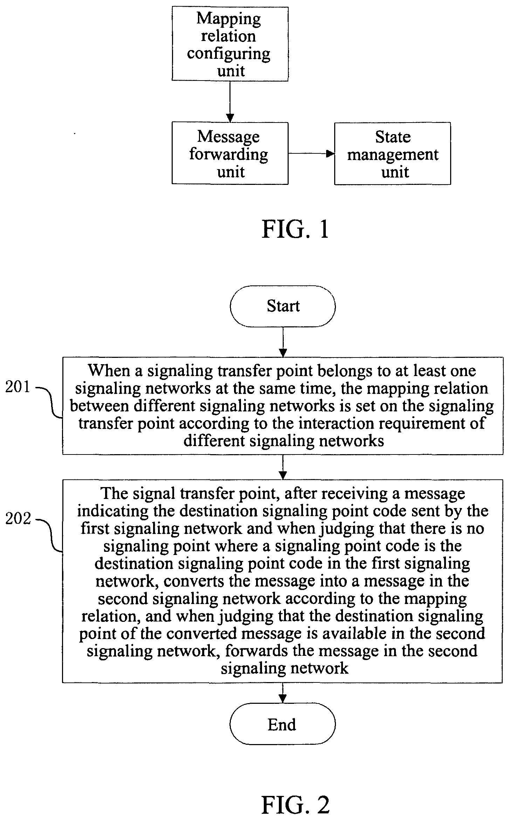

In the embodiment, the system for implementing the message interaction across network types includes a signaling transfer point belonging to more than one signaling networks at the same time. As shown in FIG. 1, the signaling transfer point includes a mapping relation configuring unit, a message forwarding unit and a state management unit;
the mapping relation configuring unit is configured to store the mapping relation set by user between different signaling networks according to the interaction requirement of different signaling networks; when the signaling network to which the signaling transfer point belongs includes a first signaling network and a second signaling network, the mapping relation refers to the corresponding relation of the network types of the first signaling network and the second signaling network, or the corresponding relation of the network types of the first signaling network and the second signaling network and the corresponding relation of signaling point codes.

The message forwarding unit is configured to, after receiving a message indicating a destination signaling point code sent by the first signaling network and when judging that there is no signaling point where the signaling point code is the destination signaling point code in the first signaling network, convert the message into a message in the second signaling network according to the mapping relation, and when judging that the destination signaling point of the converted message is available in the second signaling network, forward the message in the second signaling network.

The way that the message forwarding unit processes the data message, the destination state audit message and the signaling point congestion message sent by the first signaling network is the same with the description in the following methods.

The state management unit is configured to maintain the states of the signaling transfer points between different signaling networks; specifically, when receiving the office direction available message, update the state of the signaling transfer point as the office direction available state; when receiving the office direction unavailable message, update the state of the signaling transfer point as the office direction unavailable state; and is configured to, when receiving the signaling point congestion (SCON) message, update the state of the signaling transfer point as the congestion state.
Embodiment:
as shown in FIG. 2, the method for transmitting information across the signaling networks includes the following steps:
step 201, when a signaling transfer point belongs to more than one signaling networks at the same time, mapping relation between different signaling networks is set on the signaling transfer point according to the interaction requirement of different signaling networks;
the network types of different signaling networks are different, and the network type of the signaling network can be represented by the network appearance. The signaling points in different signaling networks can have the same signaling point code. The mapping relation can include the corresponding relation of the network types of different signaling networks, or also include the corresponding relation of the signaling point codes of different signaling networks.

The mapping relation on the signaling transfer point is set according to the requirement of communication between different signaling networks. When the communication between different signaling networks requires converting the network type, the corresponding relation of network types of different signaling networks is set. When the communication between different signaling networks also requires converting the signaling point code except for converting the network type, the corresponding relation of the signaling point codes is set except that the corresponding relation of the network types is set.

There are many ways for implementing the mapping relation, which includes the simple way of the corresponding table, or the way of the database table, or the mapping algorithm, such as Hash algorithm, etc.
step 202, the signal transfer point, after receiving a message indicating the destination signaling point code sent by the first signaling network (that is, the incoming signaling network, the network from which the message received by the IPSTP is) and when judging that there is no signaling point where the signaling point code is the destination signaling point code in the first signaling network, converts the message into a message in the second signaling network (that is, the outgoing signaling network, the destination network to which the message received by the IPSTP is to be transmitted) according to the mapping relation, and when judging that the destination signaling point of the converted message is available in the second signaling network, forwards the message in the second signaling network.

The above methods are described in detail through the service flow and the management flow hereafter.
Specific Embodiment 1:
   the specific embodiment is used for describing the forwarding flow of the data message on the IPSTP. The signaling transfer point belongs to the first signaling network and the second signaling network at the same time, and the mapping relation configured on the IPSTP includes the corresponding relation of network types of the first signaling network and the second signaling network;
   step 301, the signaling transfer point receives the data message sent by the incoming network (that is the first signaling network, represented as net1), and the message carries the network appearance of the first signaling network (netl) and the signaling point code of the destination signaling point (spc1);
   step 302, the signaling transfer point judges that no corresponding office direction is configured in the first signaling network, that is, there is no signaling point where the signaling point code is spc1 in the first signaling network;
   step 303, the signaling transfer point converts the destination signaling point code (spc1) in the first signaling network (netl) in the message into the destination signaling point code (spc1) in the second signaling network (net2) according to the set mapping relation;
   step 304, the message routing selection is performed in the second signaling network after the converting is finished; if the routing selection succeeds, that is, there is a signaling point where the signaling point code is spc1 in the second signaling network and the signaling point is available in the second signaling network, forward the message outgoing and finish forwarding the message; or else, proceed to the step 305.
   Step 305, if the office direction is available (that is, the converted signaling point code is available in the second signaling network) while the remote user is not available, and the resource signaling point is a direct office, then the opposite end destination user part unavailable (DUPU) message is returned because the remote user is unavailable; the influenced signaling point code is spc1 and the network appearance is net2; if the office direction (net1+spc1) is not available, then the opposite end destination unavailable (DUNA) message is returned, and the influenced signaling point code is spc1 and the network appearance is net2.
Specific Embodiment 2:
   the specific embodiment is used for describing the forwarding flow of the destination state audit (DAUD) message on the IPSTP. The signaling transfer point belongs to the first signaling network and the second signaling network at the same time; the mapping relation configured on the IPSTP includes the corresponding relation of network types of the first signaling network and the second signaling network.
   Step 401, the signaling transfer point receives the DAUD message where the influenced signaling point code is spc1 in the first signaling network (net1);
   step 402, the signaling transfer point judges that there is no adjacent office where the signaling point code is configured as spc1 in the first signaling network;
   step 403, the signaling transfer point converts the spc1 in the first signaling network (netl) into the spc1 in the second signaling network (net2) according to the set mapping relation;
   step 404, after the converting is finished, if there is a signaling point where the signaling point code is the destination signaling point code in the second signaling network, then the state of the signaling point where the signaling point code is the spc1 in the second signaling network is judged; when the signaling point is in the office direction available state, forward the message in the second signaling network and return the office direction available message to the first signaling network; when the signaling point is in the office direction unavailable state, return the office direction unavailable message to the first signaling network; when the signaling point is in the congestion state, return the signaling point congestion (SCON) message to the first signaling network.
Specific Embodiment 3:
   the specific embodiment is used for describing the forwarding flow of the SCON message on the IPSTP. The signaling transfer point belongs to the first signaling network and the second signaling network at the same time, and the mapping relation configured on the IPSTP includes the corresponding relation of network types of the first signaling network and the second signaling network.
   Step 501, the signaling transfer point receives the SCON message where the concerned signaling point (concerned destination) is the spc1 in the first signaling network (net1);
   step 502, the signaling transfer point judges that there is no adjacent office where the point code is configured as the spc1 in the first signaling network;
   step 503, the signaling transfer point converts the spc1 in the first signaling network (netl) into the spc1 in the second signaling network (net2) according to the set mapping relation;
   step 504, the message routing selection is performed in the second signaling network after the converting is finished, and the message is forwarded to the signaling point where the signaling point code is the spc1.
Specific Embodiment 4:
   the specific embodiment is used for describing the forwarding flow of the data message on the IPSTP. The signaling transfer point belongs to the first signaling network and the second signaling network at the same time, and the mapping relation configured on the IPSTP includes the corresponding relation of network types of the first signaling network and the second signaling network and the corresponding relation of the signaling point codes;
   step 601, the signaling transfer point receives the data message sent by the incoming network (that is the first signaling network, represented as net1), and the message carries the network type of the first signaling network (netl) and the signaling point code of the destination signaling point (spc1);
   step 602, the signaling transfer point does not configure the corresponding office direction in the first signaling network, that is, there is no signaling point where the signaling point code is the spc1 in the first signaling network, and the message cannot be forwarded;
   step 603, the signaling transfer point converts the destination signaling point code (spc1) in the first signaling network (netl) in the message into the destination signaling point code (spc2) in the second signaling network (net2) according to the set mapping relation;
   step 604, the message routing selection is performed in the second signaling network after the converting is finished; if the routing selection succeeds, forward the message outgoing and finish forwarding the message; or else, return the DUNA or DUPU message to the opposite end.

In the above system and method, through setting the mapping relation between different signaling networks on the signaling transfer point, in the case of keeping the existing signaling configuration, the message interaction and the signaling network management are implemented in different signaling networks which cannot intercommunicate originally.

The above description is only the preferred embodiments of the present invention and is not intended to limit the present invention. For those skilled in the art, the present invention can have various modifications and variations. And all of these modifications, equivalent replacements or the improvements and so on without departing from the scope of the appended claims should be included in the protection scope of the present invention.

### Industrial Applicability

When a plurality of signaling networks are interconnected and in the case of keeping the existing signaling configuration, the present invention set the mapping relation between different signaling networks on the signaling transfer point, and the message interaction and the signaling network management are implemented in different signaling networks which cannot intercommunicate originally.

## Claims

1. A method for transmitting information across networks, **characterized by** comprising:
when a signaling transfer point belongs to more than one signaling network at the same time, setting (201) a mapping relation between different signaling networks on the signaling transfer point according to an interaction requirement of said different signaling networks;
wherein the more than one signaling network to which the signaling transfer point belongs comprise a first signaling network and a second signaling network, and the mapping relation comprises a corresponding relation of network appearances of the first signaling network and the second signaling network and a corresponding relation of signaling point codes of the first signaling network and the second signaling network, and
after receiving a message indicating a destination signaling point code sent by the first signaling network, and when judging that in the first signaling network there is no signaling point whose signaling point code is the destination signaling point code, the signaling transfer point converting (202) the message into a message in the second signaling network according to the mapping relation, wherein the step of converting the message into the message in the second signaling network according to the mapping relation comprises: converting the destination signaling point code indicated by the message sent by the first signaling network into the destination signaling point code in the second signaling network according to the mapping relation; and
forwarding (202) the message in the second signaling network when in the second signaling network there is a signaling point whose signaling point code is the destination signaling point code and the signaling point is available in the second signaling network, which means that a state of the signaling point is office direction available.

2. The method according to claim 1, wherein
the step of converting the message into the message in the second signaling network according to the mapping relation comprises: the signaling transfer point, after receiving a destination state audit message carrying the destination signaling point code sent by the first signaling network and when judging that in the first signaling network no adjacent office whose signaling point code is the destination signaling point code is configured, converting the destination signaling point code indicated by the message sent by the first signaling network into the destination signaling point code in the second signaling network according to the mapping relation.

3. The method according to claim 2, further comprising:
the signaling transfer point, when judging that in the second signaling network there is the signaling point whose signaling point code is the destination signaling point code and judging that the state of the signaling point is an office direction unavailable state, returning an office direction unavailable message to the first signaling network; when judging that the state of the signaling point is a congestion state, returning a signaling point congestion message to the first signaling network.

4. The method according to claim 1, wherein
the step of converting the message into the message in the second signaling network according to the mapping relation comprises: the signaling transfer point, after receiving a signaling point congestion message carrying the destination signaling point code sent by the first signaling network and when judging that in the first signaling network no adjacent office whose signaling point code is the destination signaling point code is configured, converting the destination signaling point code indicated by the message sent by the first signaling network into the destination signaling point code in the second signaling network according to the mapping relation.

5. A system for implementing message interaction across network appearances, **characterized by** comprising
a signaling transfer point belonging to more than one signaling network at the same time, the signaling transfer point comprising a mapping relation configuring unit and a message forwarding unit; wherein
the mapping relation configuring unit is configured to set a mapping relation between different signaling networks on the signaling transfer point according to an interaction requirement of said different signaling networks, wherein the more than one signaling network to which the signaling transfer point belongs comprise a first signaling network and a second signaling network and the mapping relation comprises a corresponding relation of network appearances of the first signaling network and the second signaling network and a corresponding relation of signaling point codes of the first signaling network and the second signaling network;
the message forwarding unit is configured to: after receiving a message indicating a destination signaling point code sent by a first signaling network and when judging that in the first signaling network there is no signaling point whose signaling point code is the destination signaling point code, convert the message into a message in a second signaling network according to the mapping relation, and forward the message in the second signaling network when in the second signaling network there is a signaling point whose signaling point code is the destination signaling point code and the signaling point is available in the second signaling network, which means that a state of the signaling point is office direction available, wherein the message forwarding unit is configured to convert the message into the message in the second signaling network according to the mapping relation by a following way: converting the destination signaling point code indicated by the message sent by the first signaling network into the destination signaling point code in the second signaling network according to the mapping relation.

6. The system according to claim 5, wherein
the message forwarding unit is configured to: after receiving a destination state audit message carrying the destination signaling point code sent by the first signaling network and when judging that in the first signaling network no adjacent office whose signaling point code is the destination signaling point code is configured, convert the destination signaling point code indicated by the message sent by the first signaling network into the destination signaling point code in the second signaling network according to the mapping relation, and forward the message in the second signaling network when in the second signaling network there is a signaling point whose signaling point code is the destination signaling point code and the state of the signaling point is office direction available.

7. The system according to claim 6, wherein
the message forwarding unit is further configured to: when judging that in the second signaling network there is the signaling point whose signaling point code is the destination signaling point code and judging that the state of the signaling point is an office direction unavailable state, return an office direction unavailable message to the first signaling network; when judging that the state of the signaling point is a congestion state, return a signaling point congestion message to the first signaling network.

8. The system according to claim 5, wherein
the message forwarding unit is configured to convert the message into the message in the second signaling network according to the mapping relation by a following way: after receiving a signaling point congestion message carrying the destination signaling point code sent by the first signaling network and when judging that in the first signaling network no adjacent office whose signaling point code is the destination signaling point code is configured, converting the destination signaling point code indicated by the message sent by the first signaling network into the destination signaling point code in the second signaling network according to the mapping relation.

9. The system according to claim 8, wherein
the signaling transfer point further comprises a state management unit, and the state management unit is configured to maintain states of the signaling transfer points between different signaling networks.

10. The system according to claim 8, wherein
the state management unit is configured to: when receiving an office direction available message, update the state of the signaling transfer point as an office direction available state; when receiving an office direction unavailable message, update the state of the signaling transfer point as an office direction unavailable state; when receiving the signaling point congestion message, update the state of the signaling transfer point as a congestion state.

11. A signaling transfer point, **characterized in that** the signaling transfer point belongs to more than one signaling network at the same time, and the signaling transfer point comprises:
a mapping relation configuring unit, configured to set a mapping relation between different signaling networks on the signaling transfer point according to an interaction requirement of said different signaling networks, wherein the more than one signaling network to which the signaling transfer point belongs comprise a first signaling network and a second signaling network and the mapping relation comprises a corresponding relation of network appearances of the first signaling network and the second signaling network and a corresponding relation of signaling point codes of the first signaling network and the second signaling network; and
a message forwarding unit, configured to: after receiving a message indicating a destination signaling point code sent by a first signaling network and when judging that in the first signaling network there is no signaling point whose signaling point code is the destination signaling point code, convert the message into a message in a second signaling network according to the mapping relation, and forward the message in the second signaling network when in the second signaling network there is a signaling point whose signaling point code is the destination signaling point code and the signaling point is available in the second signaling network, which means that a state of the signaling point is office direction available (202), wherein the message forwarding unit is configured to convert the message into the message in the second signaling network according to the mapping relation by a following way: converting the destination signaling point code indicated by the message sent by the first signaling network into the destination signaling point code in the second signaling network according to the mapping relation.

12. The signaling transfer point according to claim 11, wherein
the message forwarding unit is configured to: after receiving a destination state audit message carrying the destination signaling point code sent by the first signaling network and when judging that in the first signaling network no adjacent office whose signaling point code is the destination signaling point code is configured, convert the destination signaling point code indicated by the message sent by the first signaling network into the destination signaling point code in the second signaling network according to the mapping relation, and forward the message in the second signaling network when in the second signaling network there is a signaling point whose signaling point code is the destination signaling point code and the state of the signaling point is office direction available.

13. The signaling transfer point according to claim 12, wherein
the message forwarding unit is further configured to: when judging that in the second signaling network there is the signaling point whose signaling point code is the destination signaling point code and judging that the state of the signaling point is an office direction unavailable state, return an office direction unavailable message to the first signaling network; when judging that the state of the signaling point is a congestion state, return a signaling point congestion message to the first signaling network.

14. The signaling transfer point according to claim 13, further comprising:
a state management unit, configured to maintain states of the signaling transfer points between different signaling networks.

## Patentansprüche

1. Verfahren zum Übertragen von Informationen über Netzwerke hinweg, **dadurch gekennzeichnet, dass** es umfasst, dass:
wenn ein Signalübertragungspunkt gleichzeitig zu mehr als einem Signalisierungsnetzwerk gehört, eine Zuordnungsbeziehung zwischen verschiedenen Signalisierungsnetzwerken an dem Signalübertragungspunkt in Übereinstimmung mit einem Interaktionserfordernis der verschiedenen Signalisierungsnetzwerke festgelegt wird (201);
wobei das mehr als eine Signalisierungsnetzwerk, zu denen der Signalübertragungspunkt gehört, ein erstes Signalisierungsnetzwerk und ein zweites Signalisierungsnetzwerk umfasst und die Zuordnungsbeziehung eine entsprechende Beziehung von Netzwerkerscheinungen des ersten Signalisierungsnetzwerks und des zweiten Signalisierungsnetzwerks und eine entsprechende Beziehung von Signalisierungspunktcodes des ersten Signalisierungsnetzwerks und des zweiten Signalisierungsnetzwerks umfasst, und
nach Empfangen einer Botschaft, die einen Ziel-Signalisierungspunktcode anzeigt, der von dem ersten Signalisierungsnetzwerk gesendet wurde, und wenn beurteilt wird, dass es in dem ersten Signalisierungsnetzwerk keinen Signalisierungspunkt gibt, dessen Signalisierungspunktcode der Ziel-Signalisierungspunktcode ist, der Signalübertragungspunkt die Botschaft in eine Botschaft in dem zweiten Signalisierungsnetzwerk in Übereinstimmung mit der Zuordnungsbeziehung umwandelt (202), wobei der Schritt des Umwandelns der Botschaft in die Botschaft in dem zweiten Signalisierungsnetzwerk in Übereinstimmung mit der Zuordnungsbeziehung umfasst, dass: der Ziel-Signalisierungspunktcode, der durch die Botschaft angezeigt wird, die von dem ersten Signalisierungsnetzwerk gesendet wird, in den Ziel-Signalisierungspunktcode in dem zweiten Signalisierungsnetzwerk in Übereinstimmung mit der Zuordnungsbeziehung umgewandelt wird; und
die Botschaft in dem zweiten Signalisierungsnetzwerk weitergeleitet wird (202), wenn es in dem zweiten Signalisierungsnetzwerk einen Signalisierungspunkt gibt, dessen Signalisierungspunktcode der Ziel-Signalisierungspunktcode ist und der Signalisierungspunkt in dem zweiten Signalisierungsnetzwerk verfügbar ist, was bedeutet, dass ein Zustand des Signalisierungspunkts Dienstrichtung verfügbar ist.

2. Verfahren nach Anspruch 1, wobei
der Schritt des Umwandelns der Botschaft in die Botschaft in dem zweiten Signalisierungsnetzwerk in Übereinstimmung mit der Zuordnungsbeziehung umfasst, dass: der Signalübertragungspunkt nach Empfang einer Zielzustand-Auditbotschaft, welche den Ziel-Signalisierungspunktcode trägt, der von dem ersten Signalisierungsnetzwerk gesendet wurde, und wenn beurteilt wird, dass in dem ersten Signalisierungsnetzwerk kein benachbarter Dienst konfiguriert ist, dessen Signalisierungspunktcode der Ziel-Signalisierungspunktcode ist, der Ziel-Signalisierungspunktcode, der durch die Botschaft angezeigt wird, die von dem ersten Signalisierungsnetzwerk gesendet wurde, in den Ziel-Signalisierungspunktcode in dem zweiten Signalisierungsnetzwerk in Übereinstimmung mit der Zuordnungsbeziehung umgewandelt wird.

3. Verfahren nach Anspruch 2, das ferner umfasst, dass:
der Signalübertragungspunkt dann, wenn beurteilt wird, dass es in dem zweiten Signalisierungsnetzwerk den Signalisierungspunkt gibt, dessen Signalisierungspunktcode der Ziel-Signalisierungspunktcode ist, und wenn beurteilt wird, dass der Zustand des Signalisierungspunkts ein Dienstrichtung nicht verfügbar Zustand ist, eine Dienstrichtung nicht verfügbar Botschaft an das erste Signalisierungsnetzwerk zurückgibt; wenn beurteilt wird, dass der Zustand des Signalisierungspunkts ein Überlastungszustand ist, er eine Signalisierungspunkt-Überlastungsbotschaft an das erste Signalisierungsnetzwerk zurückgibt.

4. Verfahren nach Anspruch 1, wobei
der Schritt des Umwandelns der Botschaft in die Botschaft in dem zweiten Signalisierungsnetzwerk in Übereinstimmung mit der Zuordnungsbeziehung umfasst, dass: der Signalübertragungspunkt nach Empfang einer Signalisierungspunkt-Überlastungsbotschaft, die den Ziel-Signalisierungspunktcode trägt, der von dem ersten Signalisierungsnetzwerk gesendet wurde, und wenn beurteilt wird, dass in dem ersten Signalisierungsnetzwerk kein benachbarter Dienst konfiguriert ist, dessen Signalisierungspunktcode der Ziel-Signalisierungspunktcode ist, der Ziel-Signalisierungspunktcode, der durch die Botschaft angezeigt wird, die von dem ersten Signalisierungsnetzwerk gesendet wurde, in den Ziel-Signalisierungspunktcode in dem zweiten Signalisierungsnetzwerk in Übereinstimmung mit der Zuordnungsbeziehung umgewandelt wird.

5. System zum Implementieren einer Botschaftsinteraktion über Netzwerkerscheinungen hinweg, **dadurch gekennzeichnet, dass** es umfasst
einen Signalübertragungspunkt, der gleichzeitig zu mehr als einem Signalisierungsnetzwerk gehört, wobei der Signalübertragungspunkt eine Zuordnungsbeziehungs-Konfigurationseinheit und eine Botschaftsweiterleitungseinheit umfasst; wobei
die Zuordnungsbeziehungs-Konfigurationseinheit ausgestaltet ist, um eine Zuordnungsbeziehung zwischen verschiedenen Signalisierungsnetzwerken an dem Signalübertragungspunkt in Übereinstimmung mit einem Interaktionserfordernis der verschiedenen Signalisierungsnetzwerke festzulegen, wobei das mehr als eine Signalisierungsnetzwerk, zu denen der Signalübertragungspunkt gehört, ein erstes Signalisierungsnetzwerk und ein zweites Signalisierungsnetzwerk umfasst und die Zuordnungsbeziehung eine entsprechende Beziehung von Netzwerkerscheinungen des ersten Signalisierungsnetzwerks und des zweiten Signalisierungsnetzwerks und eine entsprechende Beziehung von Signalisierungspunktcodes des ersten Signalisierungsnetzwerks und des zweiten Signalisierungsnetzwerks umfasst;
die Botschaftsweiterleitungseinheit ausgestaltet ist, um: nach Empfang einer Botschaft, die einen Ziel-Signalisierungspunktcode anzeigt, der von einem ersten Signalisierungsnetzwerk gesendet wurde, und wenn beurteilt wird, dass es in dem ersten Signalisierungsnetzwerk keinen Signalisierungspunkt gibt, dessen Signalisierungspunktcode der Ziel-Signalisierungspunktcode ist, die Botschaft in eine Botschaft in dem zweiten Signalisierungsnetzwerk in Übereinstimmung mit der Zuordnungsbeziehung umzuwandeln, und um die Botschaft in dem zweiten Signalisierungsnetzwerk weiterzuleiten, wenn es in dem zweiten Signalisierungsnetzwerk einen Signalisierungspunkt gibt, dessen Signalisierungspunktcode der Ziel-Signalisierungspunktcode ist und der Signalisierungspunkt in dem zweiten Signalisierungsnetzwerk verfügbar ist, was bedeutet, dass ein Zustand des Signalisierungspunkts in Dienstrichtung verfügbar ist, wobei die Botschaftsweiterleitungseinheit ausgestaltet ist, um die Botschaft in die Botschaft in dem zweiten Signalisierungsnetzwerk in Übereinstimmung mit der Zuordnungsbeziehung auf folgende Weise umzuwandeln: Umwandeln des Ziel-Signalisierungspunktcodes, der durch die Botschaft angezeigt wird, die von dem ersten Signalisierungsnetzwerk gesendet wurde, in den Ziel-Signalisierungspunktcode in dem zweiten Signalisierungsnetzwerk in Übereinstimmung mit der Zuordnungsbeziehung.

6. System nach Anspruch 5, wobei
die Botschaftsweiterleitungseinheit ausgestaltet ist, um: nach Empfang einer Zielzustand-Auditbotschaft, die den Ziel-Signalisierungspunktcode trägt, der von dem ersten Signalisierungsnetzwerk gesendet wurde, und wenn beurteilt wird, dass in dem ersten Signalisierungsnetzwerk kein benachbarter Dienst konfiguriert ist, dessen Signalisierungspunktcode der Ziel-Signalisierungspunktcode ist, den Ziel-Signalisierungspunktcode, der durch die Botschaft angezeigt wird, die von dem ersten Signalisierungsnetzwerk gesendet wurde, in den Ziel-Signalisierungspunktcode in dem zweiten Signalisierungsnetzwerk in Übereinstimmung mit der Zuordnungsbeziehung umzuwandeln, und um die Botschaft in dem zweiten Signalisierungsnetzwerk weiterzuleiten, wenn es in dem zweiten Signalisierungsnetzwerk einen Signalisierungspunkt gibt, dessen Signalisierungspunktcode der Ziel-Signalisierungspunktcode ist und der Zustand des Signalisierungspunkts Dienstrichtung verfügbar ist.

7. System nach Anspruch 6, wobei
die Botschaftsweiterleitungseinheit ferner ausgestaltet ist, um: wenn beurteilt wird, dass es in dem zweiten Signalisierungsnetzwerk den Signalisierungspunkt gibt, dessen Signalisierungspunktcode der Ziel-Signalisierungspunktcode ist, und wenn beurteilt wird, dass der Zustand des Signalisierungspunkts ein Zustand mit Dienstrichtung nicht verfügbar ist, eine Dienstrichtung nicht verfügbar Botschaft an das erste Signalisierungsnetzwerk zurückzugeben; wenn beurteilt wird, dass der Zustand des Signalisierungspunkts ein Überlastungszustand ist, eine Signalisierungspunkt-Überlastungsbotschaft an das erste Signalisierungsnetzwerk zurückzugeben.

8. System nach Anspruch 5, wobei
die Botschaftsweiterleitungseinheit ausgestaltet ist, um die Botschaft in die Botschaft in dem zweiten Signalisierungsnetzwerk in Übereinstimmung mit der Zuordnungsbeziehung auf folgende Weise umzuwandeln: nach Empfang einer Signalisierungspunkt-Überlastungsbotschaft, die den Ziel-Signalisierungspunktcode trägt, der von dem ersten Signalisierungsnetzwerk gesendet wurde, und wenn beurteilt wird, dass in dem ersten Signalisierungsnetzwerk kein benachbarter Dienst konfiguriert ist, dessen Signalisierungspunktcode der Ziel-Signalisierungspunktcode ist, wird der Ziel-Signalisierungspunktcode, der durch die Botschaft angezeigt wird, die von dem ersten Signalisierungsnetzwerk gesendet wurde, in den Ziel-Signalisierungspunktcode in dem zweiten Signalisierungsnetzwerk in Übereinstimmung mit der Zuordnungsbeziehung umgewandelt.

9. System nach Anspruch 8, wobei
der Signalübertragungspunkt ferner eine Zustandsverwaltungseinheit umfasst und die Zustandsverwaltungseinheit ausgestaltet ist, um Zustände der Signalübertragungspunkte zwischen verschiedenen Signalisierungsnetzwerken aufrechtzuerhalten.

10. System nach Anspruch 8, wobei
die Zustandsverwaltungseinheit ausgestaltet ist, um: wenn eine Dienstrichtung verfügbar Botschaft empfangen wird, den Zustand des Signalübertragungspunkts als einen Dienstrichtung verfügbar Zustand zu aktualisieren; wenn eine Dienstrichtung nicht verfügbar Botschaft empfangen wird, den Zustand des Signalübertragungspunkts als einen Dienstrichtung nicht verfügbar Zustand zu aktualisieren; wenn die Signalisierungspunkt-Überlastungsbotschaft empfangen wird, den Zustand des Signalübertragungspunkts als einen Überlastungszustand zu aktualisieren.

11. Signalübertragungspunkt, **dadurch gekennzeichnet, dass** der Signalübertragungspunkt gleichzeitig zu mehr als einem Signalisierungsnetzwerk gehört, und dass der Signalübertragungspunkt umfasst:
eine Zuordnungsbeziehungs-Konfigurationseinheit, die ausgestaltet ist, um eine Zuordnungsbeziehung zwischen verschiedenen Signalisierungsnetzwerken an dem Signalübertragungspunkt in Übereinstimmung mit einem Interaktionserfordernis der verschiedenen Signalisierungsnetzwerke festzulegen, wobei das mehr als eine Signalisierungsnetzwerk, zu denen der Signalübertragungspunkt gehört, ein erstes Signalisierungsnetzwerk und ein zweites Signalisierungsnetzwerk umfassen und die Zuordnungsbeziehung eine entsprechende Beziehung von Netzwerkerscheinungen des ersten Signalisierungsnetzwerks und des zweiten Signalisierungsnetzwerks und eine entsprechende Beziehung von Signalisierungspunktcodes des ersten Signalisierungsnetzwerks und des zweiten Signalisierungsnetzwerks umfasst; und
eine Botschaftsweiterleitungseinheit, die ausgestaltet ist, um: nach Empfang einer Botschaft, die einen Ziel-Signalisierungspunktcode anzeigt, der von einem ersten Signalisierungsnetzwerk gesendet wurde, und wenn beurteilt wird, dass es in dem ersten Signalisierungsnetzwerk keinen Signalisierungspunkt gibt, dessen Signalisierungspunktcode der Ziel-Signalisierungspunktcode ist, die Botschaft in eine Botschaft in einem zweiten Signalisierungsnetzwerk in Übereinstimmung mit der Zuordnungsbeziehung umzuwandeln und um die Botschaft in dem zweiten Signalisierungsnetzwerk weiterzuleiten, wenn es in dem zweiten Signalisierungsnetzwerk einen Signalisierungspunkt gibt, dessen Signalisierungspunktcode der Ziel-Signalisierungspunktcode ist und der Signalisierungspunkt in dem zweiten Signalisierungsnetzwerk verfügbar ist, was bedeutet, dass ein Zustand des Signalisierungspunkts Dienstrichtung verfügbar ist (202), wobei die Botschaftsweiterleitungseinheit ausgestaltet ist, um die Botschaft in die Botschaft in dem zweiten Signalisierungsnetzwerk in Übereinstimmung mit der Zuordnungsbeziehung auf folgende Weise umzuwandeln: Umwandeln des Ziel-Signalisierungspunktcodes, der durch die Botschaft angezeigt wird, die von dem ersten Signalisierungsnetzwerk gesendet wurde, in den Ziel-Signalisierungspunktcode in dem zweiten Signalisierungsnetzwerk in Übereinstimmung mit der Zuordnungsbeziehung.

12. Signalübertragungspunkt nach Anspruch 11, wobei
die Botschaftsweiterleitungseinheit ausgestaltet ist, um: nach Empfang einer Zielzustand-Auditbotschaft, die den Ziel-Signalisierungspunktcode trägt, der von dem ersten Signalisierungsnetzwerk gesendet wurde, und wenn beurteilt wird, dass in dem ersten Signalisierungsnetzwerk kein benachbarter Dienst konfiguriert ist, dessen Signalisierungspunktcode der Ziel-Signalisierungspunktcode ist, den Ziel-Signalisierungspunktcode, der durch die Botschaft angezeigt wird, die von dem ersten Signalisierungsnetzwerk gesendet wurde, in den Ziel-Signalisierungspunktcode in dem zweiten Signalisierungsnetzwerk in Übereinstimmung mit der Zuordnungsbeziehung umzuwandeln, und um die Botschaft in dem zweiten Signalisierungsnetzwerk weiterzuleiten, wenn es in dem zweiten Signalisierungsnetzwerk einen Signalisierungspunkt gibt, dessen Signalisierungspunktcode der Ziel-Signalisierungspunktcode ist und der Zustand des Signalisierungspunkts Dienstrichtung verfügbar ist.

13. Signalübertragungspunkt nach Anspruch 12, wobei
die Botschaftsweiterleitungseinheit ferner ausgestaltet ist, um: wenn beurteilt wird, dass es in dem zweiten Signalisierungsnetzwerk den Signalisierungspunkt gibt, dessen Signalisierungspunktcode der Ziel-Signalisierungspunktcode ist, und wenn beurteilt wird, dass der Zustand des Signalisierungspunkts ein Dienstrichtung nicht verfügbar Zustand ist, eine Dienstrichtung nicht verfügbar Botschaft an das erste Signalisierungsnetzwerk zurückzugeben; wenn beurteilt wird, dass der Zustand des Signalisierungspunkts ein Überlastungszustand ist, eine Signalisierungspunkt-Überlastungsbotschaft an das erste Signalisierungsnetzwerk zurückzugeben.

14. Signalübertragungspunkt nach Anspruch 13, der ferner umfasst:
eine Zustandsverwaltungseinheit, die ausgestaltet ist, um Zustände der Signalübertragungspunkte zwischen verschiedenen Signalisierungsnetzwerken aufrechtzuerhalten.

## Revendications

1. Procédé de transmission d'informations entre des réseaux, **caractérisé en ce qu'**il comprend les étapes consistant à :
lorsqu'un point de transfert de signalisation appartient à plus d'un réseau de signalisation en même temps, établir (201) une relation de mappage entre différents réseaux de signalisation sur le point de transfert de signalisation selon une exigence d'interaction desdits différents réseaux de signalisation ;
lesdits plus d'un réseau de signalisation auxquels appartient le point de transfert de signalisation comprenant un premier réseau de signalisation et un second réseau de signalisation et la relation de mappage comprenant une relation correspondante d'apparences de réseau du premier réseau de signalisation et du second réseau de signalisation et une relation correspondante de codes de point de signalisation du premier réseau de signalisation et du second réseau de signalisation, et
après réception d'un message indiquant un code de point de signalisation de destination envoyé par le premier réseau de signalisation et lorsqu'il est jugé qu'il n'existe pas, dans le premier réseau de signalisation, de point de signalisation dont le code de point de signalisation est le code de point de signalisation de destination, le point de transfert de signalisation convertit (202) le message en un message dans le second réseau de signalisation selon la relation de mappage, l'étape consistant à convertir le message en message dans le second réseau de signalisation selon la relation de mappage consistant à : convertir le code de point de signalisation de destination indiqué par le message envoyé par le premier réseau de signalisation en code de point de signalisation de destination dans le second réseau de signalisation selon la relation de mappage ; et
transmettre (202) le message dans le second réseau de signalisation lorsqu'il existe, dans le second réseau de signalisation, un point de signalisation dont le code de point de signalisation est le code de point de signalisation de destination et le point de signalisation est disponible dans le second réseau de signalisation, qui signifie qu'un état du point de signalisation est direction de central disponible.

2. Procédé selon la revendication 1, dans lequel
l'étape consistant à convertir le message en message dans le second réseau de signalisation selon la relation de mappage consiste en ce que : le point de transfert de signalisation, après réception d'un message d'audit d'état de destination portant le code de point de signalisation de destination envoyé par le premier réseau de signalisation et lorsqu'il est jugé que, dans le premier réseau de signalisation, aucun central adjacent dont le code de point de signalisation est le code de point de signalisation de destination n'est configuré, convertit le code de point de signalisation de destination indiqué par le message envoyé par le premier réseau de signalisation en code de point de signalisation de destination dans le second réseau de signalisation selon la relation de mappage.

3. Procédé selon la revendication 2, consistant en outre en ce que :
le point de transfert de signalisation, lorsqu'il est jugé que le point de signalisation dont le code de point de signalisation est le code de point de signalisation de destination existe dans le second réseau de signalisation et lorsqu'il est jugé que l'état du point de signalisation est un état direction de central non disponible, renvoie un message direction de central non disponible au premier réseau de signalisation ; lorsqu'il est jugé que l'état du point de signalisation est un état de congestion, renvoie un message de congestion de point de signalisation au premier réseau de signalisation.

4. Procédé selon la revendication 1, dans lequel
l'étape consistant à convertir le message en message dans le second réseau de signalisation selon la relation de mappage consiste en ce que : le point de transfert de signalisation, après réception d'un message de congestion de point de signalisation portant le code de point de signalisation de destination envoyé par le premier réseau de signalisation et lorsqu'il est jugé que, dans le premier réseau de signalisation, aucun central adjacent dont le code de point de signalisation est le code de point de signalisation de destination n'est configuré, convertit le code de point de signalisation de destination indiqué par le message envoyé par le premier réseau de signalisation en code de point de signalisation de destination dans le second réseau de signalisation selon la relation de mappage.

5. Système pour mettre en oeuvre une interaction de messages entre des apparences de réseau, **caractérisé en ce qu'**il comprend
un point de transfert de signalisation appartenant à plus d'un réseau de signalisation en même temps, le point de transfert de signalisation comprenant une unité de configuration de relation de mappage et une unité de transmission de messages ; dans lequel
l'unité de configuration de relation de mappage est configurée pour établir une relation de mappage entre différents réseaux de signalisation sur le point de transfert de signalisation selon une exigence d'interaction desdits différents réseaux de signalisation, lesdits plus d'un réseau de signalisation auxquels appartient le point de transfert de signalisation comprenant un premier réseau de signalisation et un second réseau de signalisation et la relation de mappage comprenant une relation correspondante d'apparences de réseau du premier réseau de signalisation et du second réseau de signalisation et une relation correspondante de codes de point de signalisation du premier réseau de signalisation et du second réseau de signalisation ;
l'unité de transmission de messages est configurée pour : après réception d'un message indiquant un code de point de signalisation de destination envoyé par un premier réseau de signalisation et lorsqu'il est jugé qu'il n'existe pas, dans le premier réseau de signalisation, de point de signalisation dont le code de point de signalisation est le code de point de signalisation de destination, convertir le message en un message dans un second réseau de signalisation selon la relation de mappage, et transmettre le message dans le second réseau de signalisation lorsqu'il existe, dans le second réseau de signalisation, un point de signalisation dont le code de point de signalisation est le code de point de signalisation de destination et le point de signalisation est disponible dans le second réseau de signalisation, ce qui signifie qu'un état du point de signalisation est direction de central disponible, l'unité de transmission de messages étant configurée pour convertir le message en message dans le second réseau de signalisation selon la relation de mappage de la manière suivante : convertir le code de point de signalisation de destination indiqué par le message envoyé par le premier réseau de signalisation en code de point de signalisation de destination dans le second réseau de signalisation selon la relation de mappage.

6. Système selon la revendication 5, dans lequel
l'unité de transmission de messages est configurée pour : après réception d'un message d'audit d'état de destination portant le code de point de signalisation de destination envoyé par le premier réseau de signalisation et lorsqu'il est jugé que, dans le premier réseau de signalisation, aucun central adjacent dont le code de point de signalisation est le code de point de signalisation de destination n'est configuré, convertir le code de point de signalisation de destination indiqué par le message envoyé par le premier réseau de signalisation en code de point de signalisation de destination dans le second réseau de signalisation selon la relation de mappage, et transmettre le message dans le second réseau de signalisation lorsqu'il existe, dans le second réseau de signalisation, un point de signalisation dont le code de point de signalisation est le code de point de signalisation de destination et l'état du point de signalisation est direction de central disponible.

7. Système selon la revendication 6, dans lequel
l'unité de transmission de messages est en outre configurée pour : lorsqu'il est jugé que le point de signalisation dont le code de point de signalisation est le code de point de signalisation de destination existe dans le second réseau de signalisation et lorsqu'il est jugé que l'état du point de signalisation est un état direction de central non disponible, renvoyer un message direction de central non disponible au premier réseau de signalisation ; lorsqu'il est jugé que l'état du point de signalisation est un état de congestion, renvoyer un message de congestion de point de signalisation au premier réseau de signalisation.

8. Système selon la revendication 5, dans lequel
l'unité de transmission de messages est configurée pour convertir le message en message dans le second réseau de signalisation selon la relation de mappage de la manière suivante : après réception d'un message de congestion de point de signalisation portant le code de point de signalisation de destination envoyé par le premier réseau de signalisation et lorsqu'il est jugé que, dans le premier réseau de signalisation, aucun central adjacent dont le code de point de signalisation est le code de point de signalisation de destination n'est configuré, convertir le code de point de signal de destination indiqué par le message envoyé par le premier réseau de signalisation en code de point de signalisation de destination dans le second réseau de signalisation selon la relation de mappage.

9. Système selon la revendication 8, dans lequel
le point de transfert de signalisation comprend en outre une unité de gestion d'états et l'unité de gestion d'états est configurée pour maintenir des états des points de transfert de signalisation entre différents réseaux de signalisation.

10. Système selon la revendication 8, dans lequel
l'unité de gestion d'états est configurée pour : lors de la réception d'un message direction de central disponible, mettre à jour l'état du point de transfert de signalisation comme étant un état direction de central disponible ; lors de la réception d'un message direction de central non disponible, mettre à jour l'état du point de transfert de signalisation comme étant un état direction de central non disponible ; lors de la réception du message de congestion de point de signalisation, mettre à jour l'état du point de transfert de signalisation comme étant un état de congestion.

11. Point de transfert de signalisation, **caractérisé en ce que** le point de transfert de signalisation appartient à plus d'un réseau de signalisation en même temps, et le point de transfert de signalisation comprend :
une unité de configuration de relation de mappage, configurée pour établir une relation de mappage entre différents réseaux de signalisation sur le point de transfert de signalisation selon une exigence d'interaction desdits différents réseaux de signalisation, lesdits plus d'un réseau de signalisation auxquels appartient le point de transfert de signalisation comprenant un premier réseau de signalisation et un second réseau de signalisation et la relation de mappage comprenant une relation correspondante d'apparences de réseau du premier réseau de signalisation et du second réseau de signalisation et une relation correspondante de codes de point de signalisation du premier réseau de signalisation et du second réseau de signalisation ; et
une unité de transmission de messages configurée pour : après réception d'un message indiquant un code de point de signalisation de destination envoyé par un premier réseau de signalisation et lorsqu'il est jugé qu'il n'existe pas, dans le premier réseau de signalisation, de point de signalisation dont le code de point de signalisation est le code de point de signalisation de destination, convertir le message en un message dans un second réseau de signalisation selon la relation de mappage, et transmettre le message dans le second réseau de signalisation lorsqu'il existe, dans le second réseau de signalisation, un point de signalisation dont le code de point de signalisation est le code de point de signalisation de destination et le point de signalisation est disponible dans le second réseau de signalisation, ce qui signifie qu'un état du point de signalisation est direction de central disponible (202), l'unité de transmission de messages étant configurée pour convertir le message en message dans le second réseau de signalisation selon la relation de mappage de la manière suivante : convertir le code de point de signalisation de destination indiqué par le message envoyé par le premier réseau de signalisation en code de point de signalisation de destination dans le second réseau de signalisation selon la relation de mappage.

12. Point de transfert de signalisation selon la revendication 11, dans lequel
l'unité de transmission de messages est configurée pour : après réception d'un message d'audit d'état de destination portant le code de point de signalisation de destination envoyé par le premier réseau de signalisation et lorsqu'il est jugé que, dans le premier réseau de signalisation, aucun central adjacent dont le code de point de signalisation est le code de point de signalisation de destination n'est configuré, convertir le code de point de signalisation de destination indiqué par le message envoyé par le premier réseau de signalisation en code de point de signalisation de destination dans le second réseau de signalisation selon la relation de mappage, et transmettre le message dans le second réseau de signalisation lorsqu'il existe, dans le second réseau de signalisation, un point de signalisation dont le code de point de signalisation est le code de point de signalisation de destination et l'état du point de signalisation est direction de central disponible.

13. Point de transfert de signalisation selon la revendication 12, dans lequel
l'unité de transmission de messages est en outre configurée pour : lorsqu'il est jugé que le point de signalisation dont le code de point de signalisation est le code de point de signalisation de destination existe dans le second réseau de signalisation et lorsqu'il est jugé que l'état du point de signalisation est un état direction de central non disponible, renvoyer un message direction de central non disponible au premier réseau de signalisation ; lorsqu'il est jugé que l'état du point de signalisation est un état de congestion, renvoyer un message de congestion de point de signalisation au premier réseau de signalisation.

14. Point de transfert de signalisation selon la revendication 13, comprenant en outre :
une unité de gestion d'états, configurée pour maintenir des états des points de transfert de signalisation entre différents réseaux de signalisation.
